# EUROPEAN PATENT APPLICATION

(11) **EP 2 284 941 A1**
(43) Date of publication of application: **16.02.2011**
(21) Application number: 09766359.5
(22) Date of filing: 28.04.2009
(51) Int. Cl.: H01M 10/42, H01M 2/10, H01M 2/20, H01M 2/34, H02H 7/18, H02J 7/00

(54) **BATTERY PACK**

(30) Priority: 20.06.2008 JP 2008161467
(71) Applicant: Panasonic Corporation, Kadoma-shi Osaka 571-8501 (JP)
(72) Inventor: INOUE, Toshihiro, 1-61 Shiromi 2-chome, Chuo-ku, Osaka-shi, 540-6207 Osaka (JP)
(74) Representative: TBK-Patent
(86) International application number: PCT/JP2009/001930
(87) International publication number: WO 2009/153911

(57) **Abstract**

Disclosed is a battery pack provided with: a plurality of battery modules connected to one another to serve as a power source; a case for housing the battery modules; and respective output terminals for a positive pole and a negative pole of the above power source, the output terminals being disposed outside the case. Herein, at least one point in: a module/module connecting means for connecting the plurality of battery modules to one another inside of the case; and a module/output terminal connecting means for connecting the battery module and the output terminal inside of the case, is provided with a current-interrupting means capable of switching operating states thereof between: an active state in which a current is interrupted or a current of a predetermined value or higher is interrupted; and an inactive state in which a current is not interrupted.

## Description

### [Field of Invention]

The present invention relates to a battery pack, and further relates to a battery pack in which a plurality of battery modules are connected to one another to configure a power source.

### [Background of Invention]

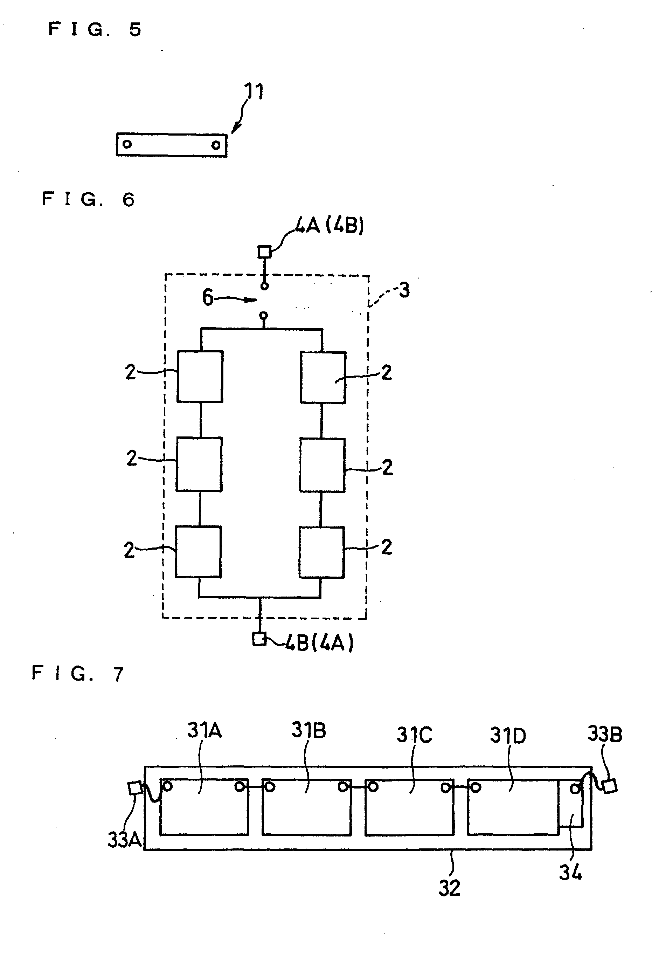

Currently, battery packs, each in which a plurality of secondary batteries are connected to one another to achieve high voltage and high output, are used as power sources for products such as hybrid cars. As illustrated in FIG 7, a battery pack is assembled of a plurality of battery modules 31 A, 31 B, 31C, and 31D, each of which is further assembled of a plurality of secondary batteries (e.g., nickel-metal hydride batteries), connected to one another and housed in an insulating case 32. Provided on the outside of the case are respective output terminals 33A and 33B of a positive pole and a negative pole. Charging and discharging of the battery modules 31 A, 31 B, 31C, and 31D are controlled by a battery module control unit 34 (refer to PTL 1, for example).

Such a battery pack can deliver characteristics of high voltage and high output, but also requires sufficient care in its handling, since the current that flows to the outside and the amount of heat generated become large in the case where the output terminals come in contact with foreign objects or the like. Therefore, to prevent the output terminals on the outside of the case from coming into contact with foreign objects, they are covered, when, for example, the battery pack is transported after being charged at a factory or elsewhere. However, this cannot be seen as the best protective countermeasure, since such covers may come off. Thus, a new and reasonable design that assures safety is in demand.
Putting on the covers tightly so as to prevent them from coming off can be considered. However, if they are to be put on too tight, time and effort would be increasingly required for putting on and taking off the covers, which would also lead to a cost increase. Therefore, the above consideration is not practical.

### [Citation List]

### [Patent Literature]

[PTL1] Japanese Laid-Open Patent Publication No. 2001-145212

### [Summary of Invention]

### [Technical Problem]

The present invention is made in view of the above problem, and aims to provide a safety-improved battery pack assembled of a plurality of battery modules connected to one another that are housed in a case, with output terminals disposed outside the case.

### [Solution to Problem]

In order to achieve the above object, the battery pack of the present invention comprises: a plurality of battery modules connected to one another to serve as a power source; a case for housing the battery modules; respective output terminals for a positive pole and a negative pole of the power source, the output terminals being disposed outside of the case; module/module connecting means for connecting the plurality of battery modules to one another, module/output terminal connecting means for connecting the battery module and the each output terminal; and a current-interrupting means, which is disposed inside the case and is at least one point in the module/module connecting means and the module/output terminal connecting means, capable of switching operating states thereof between an active state in which a current is interrupted or a current of a predetermined value or higher is interrupted and an inactive state in which a current is not interrupted.

Herein, it is preferable that, in the active state, the current-interrupting means comprises an open circuit portion formed by opening the at least one point in the module/module connecting means and the module/output terminal connecting means, and that dosing of the open circuit portion by a conductor causes the operating state to switch from the active state to the inactive state.

Additionally, it is also preferable that, in the active state, the current-interrupting means comprises: an open circuit portion formed by opening the at least one point in the module/module connecting means and the module/output terminal connecting means; and a fuse disposed at the open circuit portion, and that replacing of the fuse with a conductor causes the operating state to switch from the active state to the inactive state.

Further, it is also preferable that the current-interrupting means comprises: an open circuit portion formed by opening the at least one point in the module/module connecting means and the module/output terminal connecting means; and a relay disposed at the open circuit portion, and that opening and dosing of the relay cause the operating state to switch between the active state and the inactive state.

Still further, the conductor preferably includes a current-detecting device such as a shunt resistor or the like, and is a good conductor made of metal such as a copper plate.

### [Advantageous Effects of Invention]

According to the present invention, the operating state set to the active state by the current-interrupting means causes a limit to be set on the current that leaks out of the pair of output terminals disposed outside the case. Thus, serious accidents due to current leakage are prevented from occurring, even when foreign objects or the like come in contact with the output terminals in the case of, for example, transporting the battery packs after the battery modules therein have been charged. As such, safety of the battery pack can be improved.

Additionally, switching the operating state to the inactive state by the current-interrupting means instantly enables the battery pack to be used as usual.

### [Brief Description of Drawings]

[FIG 1] A schematic view of a battery pack according to one embodiment of the present invention, illustrating the case where the operating state set by a current-interrupting means is in an active state.
[FIG 2] A schematic view of the battery pack, illustrating the case where the operating state set by the current-interrupting means is in an inactive state.
[FIG 3] An enlarged view of the main part of a battery pack according to a modification of the embodiment.
[FIG 4] A plan view of a fuse used in the modification of the embodiment.
[FIG 5] A plan view of a conductive member used in the modification of the embodiment.
[FIG 6] A schematic view of the battery pack according to the modification of the embodiment, illustrating the state of connection among battery modules therein.
[FIG 7] A schematic view of a conventional battery pack.

### [Description of Embodiment]

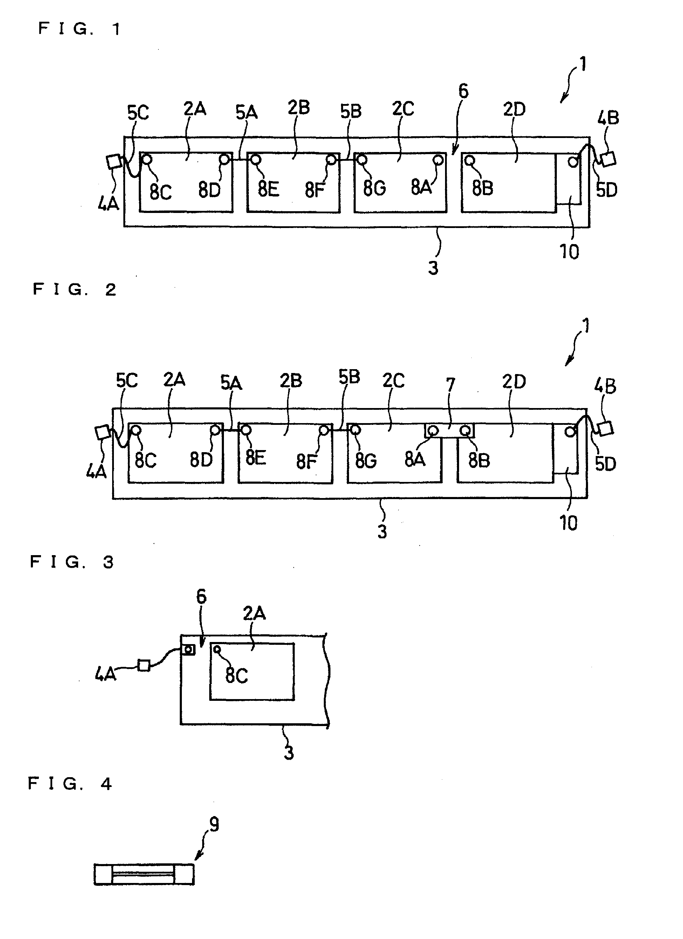

In the following, an embodiment of the present invention will be explained with reference to drawings. FIG. 1 is a schematic view of a battery pack according to one embodiment of the present invention.
The battery pack of FIG 1 comprises a plurality (illustrated in drawing: four) of battery modules 2A, 2B, 2C, and 2D, each of which is assembled of a plurality of secondary batteries (e.g., nickel-metal hydride batteries) connected to one another to serve as a power source. The battery modules 2A to 2D are housed in a case 3 made of an insulating material, and provided outside the case 3 are respective output terminals 4A and 4B of a positive pole and a negative pole of the above power source that is configured of the battery modules 2A to 2D. Herein, the case 3 is formed in such a manner that at least the part facing an open circuit portion 6 described below is capable of opening and dosing, so as to enable the task of connecting the open circuit portion 6 thereto. Also, charging and discharging of the battery modules 2A to 2D disposed between the output terminals 4A and 4B are controlled by a battery module control unit 10. Note that FIG. 1 is a plan view of the battery pack 1 illustrated as seen through the case 3.

More specifically: a terminal 8C (e.g., positive electrode terminal of the battery module 2A disposed at one end of the battery modules 2A to 2D connected in series, is connected to the output terminal 4A via a connecting wire 5C; and a terminal (e.g., negative electrode terminal), not indicated, of the battery module 2D disposed at the other end of the battery modules 2A to 2D, is connected to the output terminal 4B via the battery module control unit 10 and a connecting wire 5D. Note that FIG. 1 illustrates the case where, for simplification, the four battery modules 2A to 2D are connected in series to configure a power source. However, the present invention can be applied, not only to a battery pack having a connection configuration as described above, but also to a battery pack having a connection configuration as described below in which battery modules are connected in series and in parallel.

Additionally, from the battery modules 2A through 2D, a connecting wire 5A connects a terminal 8D of the battery module 2A and a terminal 8E of the battery module 2B, and a connecting wire 5B connects a terminal 8F of the battery module 2B and a terminal 8G of the battery module 2C. However, there is no connection between a terminal 8A of the battery module 2C and a terminal 8B of the battery module 2D, thus forming an open circuit portion 6 which is one point among module/module connecting means for connecting the battery modules 2A to 2D to one another inside the battery case 3. In this state (active state), difference in potential does not occur between the output terminals 4A and 4B, and the current of the above module/module connecting means is interrupted.

Further, as illustrated in FIG. 2, the open circuit portion 6 becomes dosed (state where current is capable of flowing) by, for example, connecting both ends of a shunt resistor 7 used as a current sensor, to the terminal 8A of the battery module 2C and the terminal 8B of the battery module 2D, respectively. In this state (inactive state), difference in potential occurs between the output terminals 4A and 4B, and the current of the above module/module connecting means is not interrupted.

As such, the open circuit portion 6 is provided at the module/module connecting means for connecting the battery modules 2A to 2D to one another, thereby enabling the battery pack 1 to be transported with the open circuit portion 6 left open when, for example, it is transported after being charged at an factory or elsewhere. Thus, in the case of providing covers (not illustrated) for covering the output terminals 4A and 4B so as to prevent contact with foreign objects or the like, even when the covers come off and the terminals come in contact with foreign objects or the like, current leakages from the output terminals 4A and 4B to the outside can be prevented.

Additionally, when the battery pack 1 is installed in, for example, a hybrid car (not illustrated), the case 3 is opened and the terminal 8A of the battery module 2C and the terminal 8B of the battery module 2D are connected by a current detecting device 7 which is a shunt resistor. This causes the open circuit portion 6 to dose. Subsequently, by dosing the case 3, the battery pack becomes usable.

As above, the present invention has been described with reference to an embodiment; however, it is further capable of various modifications. For example, in the above embodiment, the open circuit portion 6 is provided at the module/module connecting means for connecting the battery modules 2A to 2D to one another, however, as illustrated in FIG. 3, the open circuit portion 6 may also be formed at a connecting means (module/output terminal connecting means) for connecting, for example, the output terminal 4A and the terminal 8C of the battery module 2A. This configuration also enables the same effect as that of the above embodiment to be delivered.

Additionally, a fuse 9 as illustrated in FIG. 4 may be disposed at the open circuit portion 6, so as to interrupt current when a current of a predetermined value or higher flows. The fuse 9 is replaced with a conductor such as a shunt resistor, when making the battery pack 1 usable.
Further, a relay may be disposed at the open circuit portion 6, so as to have the open circuit portion 6 left open during transport of the battery pack 1, and to have it left dosed when the battery pack 1 is in use.
Still further, although the open circuit portion 6 has been defined as being dosed by the current-detecting device 7 which is a shunt resistor, it may also be dosed by a conducting member 11 as illustrated in FIG. 5, which is a good conductor such as a copper plate.

Additionally, as illustrated in FIG. 6, a power source can be configured by connecting battery modules 2 in series and in parallel. In this case, the open circuit portion 6 may be formed at, at least one of the connecting means (module/output terminal connecting means) for connecting the power source with the output terminals 4A and 4B.
Further, the batteries with which the battery pack is assembled are not limited to nickel-metal hydride batteries. The present invention can be suitably applied to, for example, a battery pack assembled of secondary batteries such as lithium ion batteries and lithium polymer batteries, or secondary batteries applied for the purpose of high power output, namely, valve-regulated lead-acid batteries.

### [Industrial Applicability]

The battery pack of the present invention is capable of improvement in safety for a battery pack having characteristics of high voltage and high output. Therefore it is useful as a battery pack used as a power source for hybrid cars or the like. Particularly, the present invention is capable of contributing to improving safety of a battery pack assembled of secondary batteries such as lithium ion batteries and lithium polymer batteries, or secondary batteries applied for the purpose of high output, namely, valve-regulated lead-acid batteries.

### [Reference Signs List]

- 1: battery pack
- 2: battery module
- 3: case
- 4: output terminal
- 6: open circuit portion
- 7: current-detecting device
- 9: fuse
- 11: conductive material

## Claims

1. A battery pack comprising:
a plurality of battery modules connected to one another to serve as a power source;
a case for housing said battery modules;
respective output terminals for a positive pole and a negative pole of said power source, said output terminals being disposed outside of said case;
module/module connecting means for connecting said plurality of battery modules to one another,
module/output terminal connecting means for connecting each of said battery modules and said each output terminal; and
a current-interrupting means, which is disposed inside said case and is at least one point in said module/module connecting means and said module/output terminal connecting means, capable of switching operating states thereof between an active state in which a current is interrupted or a current of a predetermined value or higher is interrupted and an inactive state in which a current is not interrupted.

2. The battery pack in accordance with daim 1,
wherein, in said active state, said current-interrupting means comprises an open circuit portion formed by opening said at least one point in said module/module connecting means and said module/output terminal connecting means, and
dosing of said open circuit portion by a conductor causes the operating state to switch from said active state to said inactive state.

3. The battery pack in accordance with daim 1,
wherein, in said active state, said current-interrupting means comprises: an open circuit portion formed by opening said at least one point in said module/module connecting means and said module/output terminal connecting means; and a fuse disposed at said open circuit portion, and
replacing of said fuse with a conductor causes the operating state to switch from said active state to said inactive state.

4. The battery pack in accordance with claim 1,
wherein said current-interrupting means comprises: an open circuit portion formed by opening said at least one point in said module/module connecting means and said module/output terminal connecting means; and a relay disposed at said open circuit portion, and
opening and dosing of said relay cause the operating state to switch between said active state and said inactive state.

5. The battery pack in accordance with daim 2 or 3, wherein said conductor includes a current-detecting device.

6. The battery pack in accordance with daim 2 or 3, wherein said conductor is a good conductor made of metal.
